(19) Europäisches Patentamt
European Patent Office
Office européen des brevets

(11) **EP 3 642 546 B1**

(12) **EUROPÄISCHE PATENTSCHRIFT**

(45) Veröffentlichungstag und Bekanntmachung des Hinweises auf die Patenterteilung:
**18.08.2021 Patentblatt 2021/33**

(21) Anmeldenummer: **18755698.0**

(22) Anmeldetag: **21.06.2018**

(51) Int Cl.:
*F28D 17/02* (2006.01)    *F24F 12/00* (2006.01)
*F28D 20/00* (2006.01)    *F28D 21/00* (2006.01)
*F24F 7/013* (2006.01)    *F28D 1/02* (2006.01)
*F28F 9/02* (2006.01)    *F04D 19/00* (2006.01)
*F04D 29/54* (2006.01)    *F24F 13/20* (2006.01)

(86) Internationale Anmeldenummer:
**PCT/DE2018/100581**

(87) Internationale Veröffentlichungsnummer:
**WO 2018/233775 (27.12.2018 Gazette 2018/52)**

(54) **WÄRMESPEICHERELEMENT FÜR DEZENTRALE RAUMBELÜFTUNGSANLAGEN MIT AXIALLÜFTER, WÄRMESPEICHERANORDNUNG SOWIE DEZENTRALE RAUMBELÜFTUNGSANLAGE**

HEAT STORAGE ELEMENT FOR DECENTRAL ROOM VENTILATION SYSTEM WITH AXIAL FAN, HEAT STORAGE DEVICE AND DECENTRAL ROOM VENTILATION SYSTEM

ELEMENT D'ACCUMULATION DE CHALEUR POUR DES INSTALLATIONS AÉRAULIQUES AVEC UN VENTILATEUR AXIAL, AGENCEMENT D'ACCUMULATEUR DE CHALEUR ET UNITÉ DE VENTILATION DÉCENTRAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.06.2017 DE 102017114034**

(43) Veröffentlichungstag der Anmeldung:
**29.04.2020 Patentblatt 2020/18**

(73) Patentinhaber: **Schmitz, Oliver**
**41066 Mönchengladbach (DE)**

(72) Erfinder: **Schmitz, Oliver**
**41066 Mönchengladbach (DE)**

(74) Vertreter: **Bonsmann, Joachim Bernhard**
**Bonsmann . Bonsmann . Frank**
**Patentanwälte**
**Kaldenkirchener Strasse 35 a**
**41063 Mönchengladbach (DE)**

(56) Entgegenhaltungen:
**EP-A1- 3 168 544**    **DE-A1- 4 104 423**
**DE-A1-102012 109 542**    **DE-B3-102015 103 594**
**DE-U1- 29 904 161**    **US-A- 4 879 880**
**US-A1- 2005 186 070**    **US-A1- 2006 257 251**

**Beschreibung**

Die vorliegende Erfindung betrifft ein Wärmespeicherelement für dezentrale Raumbelüftungsanlagen, das zur Anordnung in einem eine Raumbelüftungseinrichtung aufnehmenden, eine Längsachse definierenden Wanddurchlass ausgebildet ist, und zwar zur Anordnung an einer Stirnseite angrenzend an einen reversierbar ansteuerbaren Axiallüfter und an der anderen Stirnseite optional angrenzend oder optional verbunden mit einem Sekundärwärmespeicherelement.

Dezentrale Raumbelüftungsanlagen (auch als dezentrale Wohnraumbelüftungsanlagen bezeichnet, wenngleich die Anwendung nicht auf Wohnräume beschränkt ist) zeichnen sich durch mehrere in Außenwanddurchlässen angeordnete dezentrale Raumbelüftungseinheiten aus, die von einem gemeinsamen Steuergerät gesteuert werden. Dezentrale Anlagen weisen gegenüber zentralen Raumbelüftungsanlagen bekanntermaßen erhebliche Vorteile hinsichtlich Erstellungs- und Wartungsaufwand (vor allem unter Hygieneaspekten) auf.

Um eine wünschenswerte und gemäß aktuellem Baurecht auch vorgegebene energetische Effizienz zu gewährleisten, weisen bekannte Raumbelüftungsanlagen eine Wärmerückgewinnung mit in den Wanddurchlässen angeordneten Wärmespeichern auf, die von einem reversierbaren Lüfter zwangsdurchströmt werden. Bei einem Lüfterbetrieb mit Förderrichtung von Innen nach Außen wärmt (unter Annahme eines sog. Winterbetriebs) die abgeführte wärmere Raumluft das Wärmespeicherelement auf. Die gespeicherte Wärme wird dann bei umgekehrter Förderrichtung von außen nach innen wieder abgegeben. Die Zykluszeit bis zur Umkehr der Förderrichtung wird so bemessen, dass diese an die Speicherfähigkeit des Wärmespeichers angepasst ist und liegt typischerweise in der Größenordnung von 30 bis 120 s. Weiterhin werden in bekannter Weise jeweils zwei über die Innenräume in Strömungsverbindung stehende Lüftungseinheiten jeweils alternierend mit umgekehrter Strömungsrichtung betrieben, um einen definierten Luftaustausch durch das Objekt zu gewährleisten.

Die mögliche Baulänge dezentraler Raumbelüftungseinheiten wird durch die Längserstreckung des Außenwanddurchlasses bestimmt und ist damit von der Stärke der Außenwände einschließlich Außen- und Innenputz sowie Isolierung abhängig. Selbstverständlich wird die Außenwandstärke im Rahmen der energetischen Anforderungen unter Kosten- und Materialeinsatzaspekten möglichst gering gehalten. Ein Problem bei dezentralen Raumbelüftungsanlagen besteht dementsprechend darin, in der jeweils verfügbaren Außenwandstärke neben dem Lüfter, Filtern sowie weiteren Elementen ein ausreichend groß dimensioniertes Wärmespeicherelement unterzubringen und diese Elemente dabei auch strömungseffizient miteinander zu koppeln.

Dabei stellt eine strömungseffiziente Kopplung insbesondere zwischen Wärmespeicher und den üblicherweise verwendeten Axiallüftern keine triviale technische Aufgabe dar. Bei dezentralen Wohnraumbelüftungsanlagen werden meist Wärmespeicher aus einem keramischen Material mit parallel zur Längsachse des Wanddurchlasses verlaufenden Strömungskanälen eingesetzt, d.h., die Geometrie der Wärmespeicherelemente ist im Wesentlichen invariant bezüglich der Längsachse. Eine andere Geometrie der Strömungskanäle wäre bei keramischen Elementen produktionstechnisch schwierig zu verwirklichen. Keramik zeichnet sich durch gute Wärmespeichereigenschaften sowie gute Hygieneeigenschaften (Reinigungsmöglichkeit prinzipiell in der Spülmaschine) bei einem adäquaten Preis-/Leistungsverhältnis aus.

Jedoch ist die strömungstechnische Anbindung eines derartigen Wärmespeichers mit achsenparallelen Strömungskanälen an einen üblicherweise verwendeten Axiallüfter oder Axialventilator mit Problemen behaftet, insbesondere für den Fall, dass der Lüfter die Luft in Richtung des Wärmespeichers fördert. In diesem Falle kann bei unmittelbar benachbartem Lüfter und Wärmespeicher die durch den Lüfter eingebrachte Drallkomponente der Luftsäulenbewegung im Nahbereich zu starker Verwirbelung im Eingangsbereich der parallelen Strömungskanäle führen, was die Strömungsverluste und auch unerwünschte Strömungsgeräusche erhöht.

Zudem weist ein Axiallüfter bauartbedingt durch die zentrale Nabe mit dem Antriebmotor eine sog. strömungstechnische Totzone auf. Ein unmittelbar dahinter angeordneter Wärmespeicher wird daher in der Mitte - auf Höhe der Projektion der Lüfternabe - schwach bis gar nicht durchströmt. Außerdem ist es häufig so, dass der Förderdurchmesser eines Axiallüfters (also im Wesentlichen der Durchmesser der Lüfterflügel) geringer ist als der durchströmbare Durchmesser des Wärmespeichers, weshalb die randseitigen Bereiche des Wärmespeichers ebenfalls schwächer durchströmt sein können.

Eine derartige inhomogene Strömungsverteilung führt zum einen zu einer suboptimalen Ausnutzung der Wärmespeicherkapazität. Da sich bei inhomogener Strömungsverteilung die Strömungsgeschwindigkeiten im äußeren Bereich erhöhen, die Druckverluste jedoch wenigstens quadratisch von der Strömungsgeschwindigkeit abhängen, sinkt bei Inhomogenitäten außerdem die Förderleistung, bzw. muss die Lüfterdrehzahl zum Erreichen einer vergleichbaren Förderleistung angehoben werden, was unter Energie- und Geräuschaspekten negativ ist und letztlich zur Bereitstellung vorgegebener Luftförderleistungen ggf. einen stärker dimensionierten Lüfter erfordern kann.

Vor diesem Hintergrund ist es bereits bekannt, entweder bewusst einen größeren Abstand zwischen Lüfter und Wärmespeicher zu belassen, so dass der Eingang des Wärmespeichers aus dem Nahfeld des Lüfters rückt.

Alternativ sind auch sog. Strömungsgleichrichter bekannt, d.h. zwischen Lüfter und Wärmespeicher angeordnete strömungsleitende Strukturen, die durch gezielte Umlenkung die Drallkomponenten der Strömung zu reduzieren und den Luftstrom aus der zentralen Totzone in die umliegenden Bereiche umleiten sollen und so eine gewisse Homogenisierung der auf den Wärmespeicher auftreffenden Strömung ermöglichen.

Ein nicht spezifisch für die Anwendung bei dezentralen Lüftungsanlagen konzipierter Strömungsgleichrichter ist beispielsweise in der DE 1 052 624 A1 beschrieben.

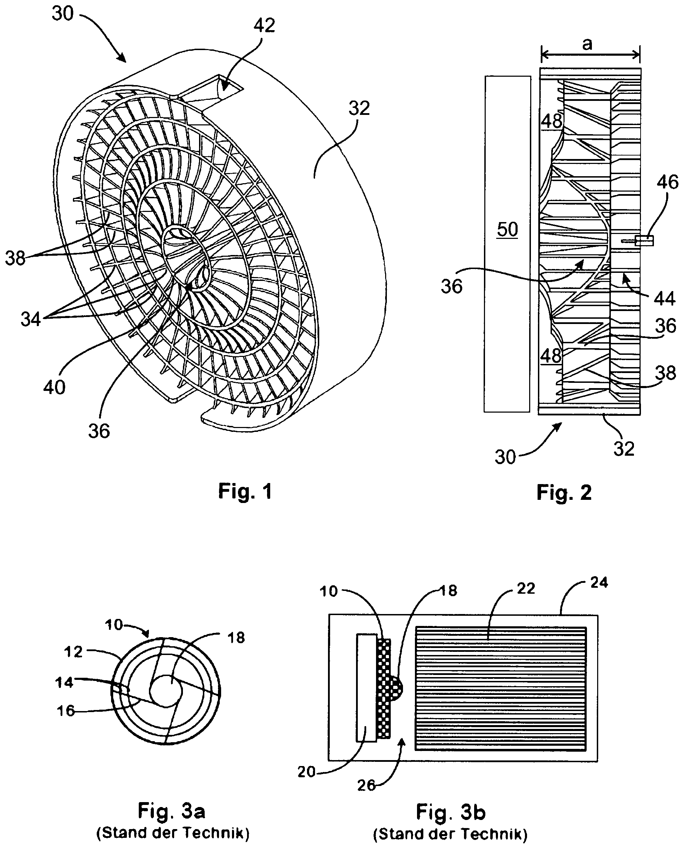

Ein vereinfachtes Schema eines auf dem Markt befindlichen Strömungsgleichrichters für die Anwendung innerhalb einer dezentralen Wohnraumbelüftungsanlage ist in den Figuren 3a (schematische Draufsicht auf den Strömungsgleichrichter) und Figur 3b (schematische Darstellung einer Belüftungsanlage mit Strömungsgleichrichter) dargestellt.

Der insgesamt mit 10 bezeichnete bekannte Strömungsgleichrichter besteht gemäß Figur 3a aus einem Außenring 12 und mehreren (im Beispiel zwei) weiteren konzentrischen Ringe 14, die relativ nahe beieinander liegen. Die Ringe 14 können (in Figur 3a und b nicht dargestellt) sich in der Richtung senkrecht zur Zeichnungsebene von Figur 3a zum Wärmespeicher hin verjüngen und somit letztlich die Form von Kegelabschnitten aufweisen, wodurch der Luftstrom auf den Zentralbereich des Wärmespeichers gerichtet werden soll. Zwischen dem Außenring 12 und den konzentrischen Ringen 14 sind Trennspeichen 16 angeordnet, die sich bis zu einem zentralen Nabenelement 18 erstrecken. Das Nabenelement 18 bildet eine den Außenring 12 überragende Kalotte als Kompensationsmaßnahme für die Totzone im Bereich der Lüfternabe aus. Die Trennspeichen 16 liegen als weitere Kompensationsmaßnahme für den Lüfterdrall nicht auf einem Radius, sondern sind schräg angeordnet und gehen mehr oder weniger tangential aus dem Nabenelement 18 hervor. In Figur 3a sind vier Trennspeichen dargestellt, bei einem kommerziell vertriebenen Strömungsgleichrichter sind dagegen acht Trennspeichen vorgesehen.

Die Figur 3b zeigt einen derartigen Strömungsgleichrichter 10 in einem Wanddurchlass 24 (im Beispiel von Figur 3b befindet sich der Innenraum links und der Außenraum rechts) in Zusammenwirkung mit einem keramischen Wärmespeicher 22, wobei direkt angrenzend an den Strömungsgleichrichter ein Axiallüfter 20 vorgesehen ist. Zwischen Strömungsgleichrichter 10 und Wärmespeicher 22 ist ein signifikanter Leerraum 26 ausgespart, der ebenfalls der Homogenisierung der Strömungsverhältnisse und dem Abbau einer vorhandenen Drallkomponente aus dem Nahfeld des Axiallüfters 20 dient.

Ein Wärmespeicherelement gemäß dem Oberbegriff des Anspruchs 1 ist aus der DE 10 2015 103 594 B3 bekannt.

Der Nachteil der vorstehend beschriebenen Anordnung oder einer Anordnung ohne Strömungsgleichrichter, sondern nur mit einem größeren Freiraum zwischen Axiallüfter und Wärmespeicher besteht darin, dass bei geringen zur Verfügung stehenden Wandstärken und damit begrenzten Einbautiefen nicht mehr ausreichend Platz für die erforderlichen Komponenten, insbesondere für einen ausreichend langen Wärmespeicher zur Verfügung stehen kann.

Der Erfindung liegt die Aufgabe zugrunde, einen Wärmespeicher für ein dezentrales Raumbelüftungssystem mit Axiallüfter zu schaffen, der auch bei geringen zur Verfügung stehenden Wandstärken eine hohe Wärmerückgewinnung durch optimale Anströmung des Wärmespeichers bereitstellt.

Die Lösung der vorgenannten Aufgabe erfolgt mittels eines Wärmespeicherelementes mit den Merkmalen des Patentanspruches 1.

Vorteilhafte Ausgestaltungen der Erfindung sind jeweils in den abhängigen Patentansprüchen erläutert.

Erfindungsgemäß wird ein Wärmespeicherelement für dezentrale Raumbelüftungsanlagen vorgeschlagen, wobei das Wärmespeicherelement zur Anordnung in einem eine Raumbelüftungseinrichtung aufnehmenden, eine Längsachse definierenden Wanddurchlass ausgebildet ist, und zwar vorzugsweise zur Anordnung an einer Stirnseite angrenzend an einen reversierbar ansteuerbaren Axiallüfter und an der anderen Stirnseite optional angrenzend oder optional verbunden mit einem Sekundärwärmespeicherelement.

Dieses Wärmespeicherelement soll zum einen strömungshomogenisierende Eigenschaften und gleichzeitig wärmespeichernde Eigenschaften aufweisen, wodurch die beiden Funktionen in einem Bauelement vereint werden können und dementsprechend die zur Verfügung stehende axiale Baulänge des Wanddurchlasses optimal genutzt werden kann.

Insbesondere soll das Wärmespeicherelement Strömungsleitelemente mit Strömungsleitflächen aufweisen, die eine Mehrzahl von Strömungskanälen ausbilden, wobei die Strömungsleitflächen nicht sämtlich parallel, sondern wenigstens zum Teil schräg zur Längsachse ausgerichtet sind. Dies steht im Gegensatz zu üblichen Wärmespeichelementen aus Keramik, bei denen sich mit vertretbarem Aufwand in der Regel nur längsachsenparallele Kanäle realisieren lassen, durch die jedoch keine nennenswerte Strömungshomogenisierung aus dem Nahfeld eines Axiallüfters möglich ist.

Gleichzeitig soll das Wärmespeicherelement ganz oder teilweise aus einem Material gebildet und/oder derart konstruktiv ausgebildet sein, dass das Wärmespeicherelement eine erhöhte Wärmespeicherfähigkeit aufweist.

In diesem Zusammenhang ist vor dem Hintergrund von einer "erhöhten Wärmespeicherfähigkeit" die Rede, dass auch bekannte Strömungsgleichrichteranordnungen notwendigerweise eine bestimmte, jedoch relativ geringe Wärmespeicherfähigkeit aufweisen.

Zur näheren Bestimmung einer erhöhten Wärmespeicherfähigkeit werden im Folgenden verschiedene Kriterien und Maßnahmen erwähnt, wobei diese nicht kumulativ vorliegen bzw. angewendet werden müssen.

Eine Möglichkeit, eine erhöhte Wärmespeicherfähigkeit quantitativ zu fassen, besteht darin, einen Strömungsgleichrichter mit vergleichbarer Strömungswirkung wie das erfindungsgemäße Wärmespeicherelement, der aber aus einem Standardkunststoff, z.B. einem hinsichtlich seiner Wärmespeicher- und Wärmeleitungseigenschaften unmodifizierten ASA- oder PVC-Kunststoff, gefertigt ist, zum Vergleich heranzuziehen; beispielsweise ein vorstehend anhand der Figuren 3a und 3b beschriebener Strömungsgleichrichter, der auf eine vergleichbare Strömungsbeeinflussung wie eine erfindungsgemäßes Wärmespeichelement ausgelegt wird, und bei dem nur das für die mechanische Stabilität erforderlichen Materialmengen eingesetzt wurde.

Eine erhöhte Wärmespeicherfähigkeit kann hiervon ausgehend beispielsweise vorliegen, wenn die Wärmespeicherzahl (Wärmekapazität . Dichte) des Wärmespeichelements insgesamt wenigstens 10% höher ist als die Wärmespeicherzahl des vergleichbaren Strömungsgleichrichters ohne Wärmespeicherfähigkeitserhöhung.

Erfindungsgemäß wird das Wärmespeicherelement entsprechend dem Kennzeichen des Anspruchs 1 ausgeführt.

In einer bevorzugen Ausführungsform kann die Wärmespeicherfähigkeit des Wärmespeicherelements durch ein oder mehrere der folgenden Maßnahmen weiter erhöht werden:

a) wenigstens teilweise Verwendung eines modifizierten Kunststoffes mit nochmals erhöhter Wärmespeicherzahl und/oder nochmals erhöhter Wärmeleitfähigkeit; und/oder

b) Erhöhung des stirnseitigen Bedeckungsgrades durch die Strömungsleitelemente und/oder Vergrößerung der Anzahl der Strömungskanäle.

Bei der Maßnahme a) kann die Wärmespeicherzahl insbesondere oberhalb von $20 \cdot 10^5 J/(K{*}m^3)$, liegen und/oder die Wärmeleitfähigkeit oberhalb von 2.0 W/(K*m) liegen.

Neben der Materialwahl kann gemäß Maßnahme b) auch die Materialeinsatzmenge sowie das Ausmaß der angeströmten Kontaktflächen und damit die Möglichkeit zu einem Wärmetransfer zwischen Luft und Wärmespeicherelement über das ansonsten technisch Erforderliche erhöht werden.

Beispielsweise kann eine Erhöhung des sog. stirnseitigen Bedeckungsgrades durch die Strömungsleitelemente erfolgen, wobei der Bedeckungsgrad der dem Lüfter zugewandten Einlassfläche des Wärmeleitelements durch die Strömungsleitelemente 30 % oder mehr betragen sollte. Bei dem vorstehend genannten Bedeckungsgrad handelt es sich um den Anteil der durch die stirnseitigen Kanten der der Strömungskanäle in Anspruch genommenen Fläche bezogen auf die Gesamtfläche der lüfterseitigen (stirnseitigen) Eintrittsfläche. Ein höherer Bedeckungsgrad hat zum einen größere Wärmeaustauschflächen zur Folge, zum anderen geht dieser mit höheren Wärmespeichermassen einher, wodurch eine Wärmespeicherung überhaupt erst möglich wird.

Alternativ kann eine Erhöhung der Anzahl der Strömungskanäle erfolgen, vorzugsweise auf mehr als 100 Einzelkanäle, und/oder auf eine Anzahl von Strömungskanälen, die wenigstens 30% der Anzahl der Strömungskanäle beträgt, die ein nachgeschaltetes Sekundärwärmespeicherelement aufweist.

Die vorstehenden Maßnahmen stellen lediglich Beispiele dar. Darüber hinaus könnte die Wärmespeicherfähigkeit durch weitere Maßnahmen, wie z.B. die Verwendung eines Materials mit besserer Wärmespeicherfähigkeit, bei dem es sich aber nicht um einen modifizierten Kunststoff handelt, erreicht werden, beispielsweise ein Metall oder ein mineralisches Material oder ein Mischmaterial, vorausgesetzt, das Material lässt sich mit vertretbarem Aufwand in eine strömungshomogenisierende Gestalt bringen. Diese Maßnahme ist jedoch nicht Bestandteil der Erfindung.

In einer bevorzugten Ausgestaltung weist das Wärmespeicherelement eine von einem Außenring gebildete zylindrische, an den Wanddurchlass angepasste Grundform auf, wobei innerhalb des Außenrings ein oder mehrere konzentrische Ringe angeordnet sind, die zusammen mit radial verlaufenden Trennspeichen eine Mehrzahl von Strömungskanälen bilden.

Dabei kann die Anzahl der Trennspeichen entlang des Umfangs zwischen zwei konzentrischen Ringen nach außen hin entweder gleichbleiben oder zunehmen, vorzugsweise ausgehend von einem Wert von wenigstens zwanzig Trennspeichen entlang des Umfanges zwischen innerstem und zweitinnersten konzentrischen Ring.

Durch eine tendenzielle Zunahme der Anzahl der Trennspeichen nach außen hin wird bewirkt, dass die ansonsten umfangsbedingte Abnahme der Grenzflächen der Strömungskanäle zur Gewährleistung eines gleichmäßigen Wärmetransfers kompensiert wird.

Weiterhin können die Strömungskanäle in einem zentralen Bereich derart divergierend ausgebildet sein, dass diese einen auf der lüfterabgewandten Seite zentral im Bereich der Projektion der Lüfternabe ein- oder ausströmenden Luftstrom lüfterseitig radial nach außen lenken. Durch diese Maßnahme wird ein Ausgleich der durch die Lüfternabe bedingten Totzone und der damit verbundenen Inhomogenitäten angestrebt.

Hierzu kann es auch sinnvoll sein, auch die weiter außen liegenden Strömungskanäle divergierend auszubilden, wobei der Divergenzwinkel vorzugsweise nach radial außen hin abnehmend gestaltet werden kann.

Weiterhin kann in der bevorzugten Ausführungsform die durch die Stirnkanten der Trennspeichen und der konzentrischen Ringe lüfterseitig gebildete Einhüllende - ausgenommen den Außenring und ausgenommen den zentralen Bereich im Bereich der Projektion der Lüfternabe - im Wesentlichen konvex ausgebildet sein. Anders formuliert, weisen radial weiter außenliegende Bereiche einen größeren Abstand zum Lüfterventilator auf als weiter innenliegende. Mit dieser Maßnahme wird in den Außenbereichen ein größerer Freiraum geschaffen, der die dort hinsichtlich der Geräuschbildung problematischere Bildung von Mikrowirbeln vermindert, während im Innenbereich der Luftstrom mit einem geringeren Freiraum gezielt durch die vorzugsweise divergierenden Kanäle nach außen hin umgeleitet wird; im Innenbereich stellt die Geräuschbildung aufgrund der geringeren Umfangsgeschwindigkeiten ein geringeres Problem dar.

In vorteilhafter Ausgestaltung können die Strömungskanäle auf der lüfterabgewandten Seite des Wärmespeicherelements zu einem optionalen Sekundärwärmespeicherelement hin unter Bildung eines Freiraumes hinter die axiale Erstreckung des Außenrings zurückspringen.

Weiterhin wird im Rahmen der vorliegenden Erfindung eine Wärmespeicheranordnung vorgeschlagen, die ein wie vorstehend beschriebenes Wärmespeicherelement aufweist, das mit einem Sekundärwärmespeicherelement mit im Wesentlichen parallel zur Längsachse verlaufenden Strömungskanälen gekoppelt ist.

Dabei ist das Wärmespeicherelement im Wesentlichen aus einem modifizierten Kunststoff und das Sekundärwärmespeicherelement ist bevorzugt aus einem keramischen Material hergestellt.

Weiterhin sind das Wärmespeicherelement und das Sekundärwärmespeicherelement bevorzugt unmittelbar hintereinander angeordnet und durch ein lösbares Kopplungselement verbunden.

Bei einer derartigen Wärmespeicheranordnung kann als alternative Definition der erhöhten Wärmespeicherfähigkeit die Wärmespeicherfähigkeit des Wärmespeicherelements und des Sekundärwärmespeichelements in eine Relation gesetzt werden: Eine erhöhte Wärmespeicherfähigkeit des Wärmespeicherelements wäre demnach auf jeden Fall dann gegeben, wenn die Wärmespeicheranordnung mit Wärmespeicherelement und Sekundärwärmespeicherelement bei 7 °C Außenlufttemperatur und 20 °C Innenlufttemperatur sowie optimierter Lüfterdrehzahl und Zykluszeit näherungsweise dieselbe Wärmespeicherfähigkeit wie eine Wärmespeicheranordnung ohne Berücksichtigung des Wärmespeicherelements nur mit einem axial verlängerten Sekundärwärmespeicherelement bei im Wesentlichen gleichen Anströmverhältnissen des Sekundärwärmespeicherelements aufweist, wobei die hierfür erforderliche axiale Verlängerung des Sekundärwärmespeicherelements 30% oder mehr der axialen Erstreckung des Wärmespeicherelements beträgt.

Das Wärmespeichelement muss somit grob gesagt bezogen auf seine axiale Erstreckung wenigstens so viel Wärmespeicherfähigkeit beisteuern können, wie sie ein Abschnitt von 30% dieser axialen Erstreckung des Sekundärwärmespeicherelements bei annähernd homogener Anströmung beizutragen vermag. Weiterhin wird im Rahmen der Erfindung eine Wärmespeicheranordnung für dezentrale Raumbelüftungsanlagen vorgeschlagen, die zur Anordnung in einem eine Raumbelüftungseinrichtung aufnehmenden, eine Längsachse definierenden Wanddurchlass ausgebildet ist, und zwar zur Anordnung an einer Stirnseite angrenzend an einen reversierbar ansteuerbaren Axiallüfter. Diese weist eine Wärmespeicheranordnung auf, die ein Wärmespeicherelement, welches Strömungsleitelemente mit Strömungsleitflächen aufweist, die eine Mehrzahl von Strömungskanälen ausbilden, wobei die Strömungsleitflächen nicht sämtlich parallel, sondern wenigstens zum Teil schräg zur Längsachse ausgerichtet sind. Das Wärmespeicherelement ist wie vorstehend beschrieben, insbesondere hinsichtlich seiner Wärmespeicherfähigkeit, ausgebildet.

Das Wärmespeicherelement ist mit einem Sekundärwärmespeicherelement mit im Wesentlichen parallel zur Längsachse verlaufenden Strömungskanälen zu einer gemeinsamen Einheit ohne Abstand zwischen den beiden Elementen, gekoppelt, wobei die Kopplung ggf. demontierbar (z.B. zu Reinigungszwecken) ausgebildet sein kann. "Ohne Abstand" soll bedeuten, dass zumindest die axialen Hülsen direkt aneinander anschließen; Leerräume innerhalb des Wärmespeicherelements zur Strömungsanpassung sollen dadurch nicht ausgeschlossen sein. In dieser Darstellung der Erfindung ist ein Element mit der Funktion eines Strömungsgleichrichters somit in die Wärmespeichereinheit konstruktiv mit integriert, im Gegensatz zu dem in Figur 3b dargestellten Stand der Technik, bei dem sich der Strömungsgleichrichter nah am Axiallüfter befindet und das Wärmespeicherelement hiervon durch einen deutlichen Leerraum getrennt ist. In dieser Konfiguration erwärmen sich das Wärmespeicherelement und das Sekundärwärmespeicherelement als gemeinsame Einheit gleichmäßiger.

Schließlich wird im Rahmen der Erfindung eine dezentrale Raumbelüftungseinrichtung mit einem vorbeschriebenen Wärmespeicherelement oder einer vorbeschriebenen Wärmespeicheranordnung sowie wenigstens einen reversierbaren Axiallüfter aufweist, der angrenzend an die Lüfterseite des Wärmespeicherelements angeordnet ist, vorgeschlagen.

Die Erfindung wird nachfolgend anhand der Zeichnungen beispielhaft näher erläutert.

Es zeigen:

Figuren 1 und 2      eine erfindungsgemäßes Wärmespeicherelement in perspektivischer Darstellung sowie in Schnittdarstellung;

Figuren 3a und 3b      eine dezentrale Raumbelüftungseinrichtung gemäß dem Stand der Technik mit Wärmespeicher und Strömungsgleichrichter; und

Figuren 4 und 5          eine erfindungsgemäße Wärmespeicheranordnung mit gekoppeltem Wärmespeicherelement und Sekundärwärmespeicherelement in perspektivischer und in Schnittdarstellung.

Die Wärmespeicherfähigkeit eines Wärmespeichers in einem dezentralen Wohnraumbelüftungssystem im sog. Push-Pull-System hängt von etlichen Faktoren ab.

Zum einen spielt die Wärmekapazität und die Dichte des Materials eine grundlegende Rolle.

Eine aussagekräftige Größe hierfür ist die sog. Wärmespeicherzahl:

$$\text{Wärmespeicherzahl} = \text{Dichte} \cdot \text{Wärmekapazität}$$

Eine hohe Wärmespeicherzahl wirkt sich jedoch dann nicht signifikant positiv aus, wenn kein ausreichender Wärmetransfer zwischen Luft und Wärmespeicher stattfinden kann. Abgesehen von der geometrischen Ausbildung der Strömungskanäle mit ausriechend groß dimensionierten Grenzflächen ist hierfür die Wärmeleitfähigkeit des Materials entscheidend. Eine ausreichende Wärmeleitfähigkeit hat sich bei der vorliegenden bevorzugten Anwendung von Kunststoffen als der kritischere Parameter erwiesen, da die Wärmespeicherzahlen gängiger Kunststoffen nicht sehr stark variieren, wie aus der nachfolgenden Tabelle ersichtlich, wobei der "Spezialkunststoff" ein hinsichtlich Wärmespeicherzahl und Wärmeleitfähigkeit besonders optimierter Kunststoff ist:

**Tabelle 1**

|  | spez. Wärmekapazität | Dichte | Wärme speicherzahl | Wärmeleit-fähigkeit |
|---|---|---|---|---|
|  | $J / (kg \cdot K)$ | $kg / m^3$ | $J / (K \cdot m^3)$ | $W / (K \cdot m)$ |
| **Keramik** | 910 | 2700 | $25 \cdot 10^5$ | 2.10 |
| **Spezial kunststoff** | 1500 | 1480 | $22 \cdot 10^5$ | 5.00 |
| **ASA-Kunststoff** | 1300 | 1070 | $14 \cdot 10^5$ | 0.20 |
| **PVC-Kunststoff** | 850 | 1380 | $12 \cdot 10^5$ | 0.17 |

Aus der Tabelle erkennt man, dass sich normale Kunststoffe hinsichtlich der Wärmespeicherzahl nicht sehr stark von einem Spezialkunststoff unterscheiden, wobei die Wärmespeicherfähigkeit von Keramik nicht übertroffen wird.

Ein Spezialkunststoff übertrifft jedoch Keramik hinsichtlich der Wärmeleitfähigkeit, im Gegensatz zu den konventionellen Kunststoffen, die hier um mehr als eine Größenordnung niedrigere Werte aufweisen.

Die Figuren 1 und 2 zeigen ein erfindungsgemäßes, insgesamt mit 30 bezeichnetes Wärmespeicherelement, das aus einem Spezialkunststoff im Spritzgussverfahren gefertigt ist.

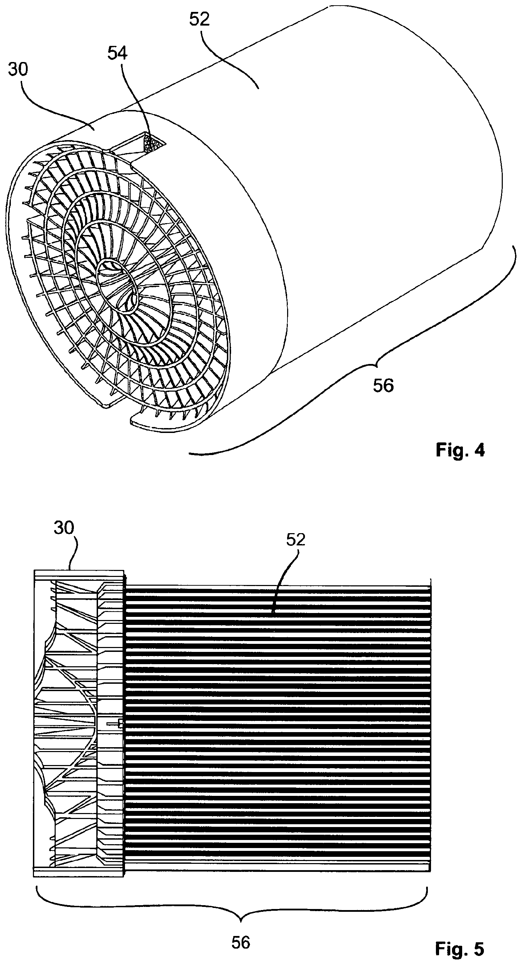

Das Wärmespeicherelement 30 weist einen Außenring 32 mit einer axialen Erstreckung a auf, in dem Durchlässe 42 für Sensorverkabelungen (nicht gezeigt) angelegt sind. Eine lösbare oder demontierbare Kopplung (z.B. zu Reinigungszwecken) mit einem konventionellen keramischen Sekundärwärmespeicherelement 52 (vgl. die Figuren 4 und 5) kann mittels Rastnasen 46 erfolgen; alternativ ist auch eine Verklebung, beispielsweise mittels Klebeband möglich.

Das Wärmespeichelement 30 ist dahingehend konzipiert, dass an eine Stirnseite bzw. An-/Abströmseite, in den Figuren 1 und 2 links, ein Axiallüfter 50 angrenzt (schematisch angedeutet in Figur 2).

In dem Außenring 32 sind weitere bezüglich einer Längsachse konzentrische Ringe 34 vorgesehen, die, wie aus der Schnittdarstellung von Figur 2 ersichtlich, zur Mitte hin zunehmend stärker geneigt sind, wodurch die Totzone des Axiallüfters kompensiert wird. Im Zentrum ist eine trichterartige Struktur 36 implementiert, die durch einen innersten Ring 40 begrenzt wird. Quer zu den konzentrischen Ringen 34 sind Trennspeichen 38 ausgebildet, so dass eine Vielzahl von Strömungskanälen gebildet wird. Dabei sind die Trennspeichen 38 zwischen den beiden innersten Ringen 34 die mit größerem Winkelabstand implementiert als bei den folgenden äußeren Ringen.

Lüfterseitig springen die äußeren Ringe axial zurück, so dass entsprechende Freiräume 48 ausgebildet werden. Auf der dem Sekundärwärmespeicher zugewandten Seite, der anderen Stirnseite bzw. An-/Abströmseite, ist ein Leerraum 44 zur Strömungsanpassung an die Kanäle 54 (vgl. Figur 4) des Sekundärwärmespeichers 52 vorgesehen.

Die Anordnung aus Wärmespeicherelement 30 und Sekundärwärmespeicherelement 52 ist in den Figur 4 und 5 mit 56 bezeichnet. Beide Elemente 30, 52 sind dabei mit Ihrem Außengehäuse ohne nennenswerten Abstand miteinander verbunden.

**Patentansprüche**

1. Wärmespeicherelement (30) für dezentrale Raumbelüftungsanlagen, das zur Anordnung in einem eine Raumbelüftungseinrichtung aufnehmenden, eine Längsachse definierenden Wanddurchlass ausgebildet ist, und zwar zur Anordnung an einer Stirnseite angrenzend an einen reversierbar ansteuerbaren Axiallüfter (50) und an der anderen Stirnseite optional angrenzend oder optional verbunden mit einem Sekundärwärmespeicherelement(52),
**dadurch gekennzeichnet, dass**
das Wärmespeicherelement (30) Strömungsleitelemente mit Strömungsleitflächen aufweist, die eine Mehrzahl von Strömungskanälen ausbilden, wobei die Strömungsleitflächen nicht sämtlich parallel, sondern wenigstens zum Teil schräg zur Längsachse ausgerichtet sind, und
dass das Wärmespeicherelement (30) ganz oder teilweise aus einem Material gebildet ist und/oder derart konstruktiv ausgebildet ist, dass das Wärmespeicherelement (30) eine erhöhte Wärmespeicherfähigkeit aufweist, wobei die erhöhte Wärmespeicherfähigkeit des Wärmespeicherelements (30) durch wenigstens teilweise Verwendung eines modifizierten Kunststoffes mit erhöhter Wärmespeicherzahl, wobei die Wärmespeicherzahl oberhalb von $13 \cdot 10^5$ J/(K*m$^3$) liegt, und mit erhöhter Wärmeleitfähigkeit, wobei die Wärmeleitfähigkeit bei oder oberhalb von 1.0 W/(K*m) liegt, erreicht wird.

2. Wärmespeicherelement (30) nach Anspruch 1,
**dadurch gekennzeichnet, dass**
die erhöhte Wärmespeicherfähigkeit des Wärmespeicherelements (30) durch ein oder mehrere der folgenden Maßnahmen erreicht wird:

a) wenigstens teilweise Verwendung eines modifizierten Kunststoffes mit erhöhter Wärmespeicherzahl, wobei die Wärmespeicherzahl oberhalb von $20 \cdot 10^5$ J/(K*m$^3$), liegt, und/oder mit erhöhter Wärmeleitfähigkeit, wobei die Wärmeleitfähigkeit bei oder oberhalb von 2.0 W/(K*m) liegt; und/oder
b) Erhöhung des Bedeckungsgrades durch die Strömungsleitelemente, wobei der Bedeckungsgrad der dem Lüfter zugewandten Einlassfläche des Wärmeleitelements durch die Strömungsleitelemente 30% oder mehr beträgt, und/oder Erhöhung der Anzahl der Strömungskanäle, vorzugsweise auf mehr als 100 Einzelkanäle und/oder, sofern ein nachgeschaltetes Sekundärwärmespeicherelement (52) vorgesehen ist, auf eine Anzahl von Strömungskanälen, die wenigstens 30% der Anzahl der Strömungskanäle beträgt, die das nachgeschaltete Sekundärwärmespeicherelement (52) aufweist.

3. Wärmespeicherelement (30) nach Anspruch 1 oder 2,
**dadurch gekennzeichnet, dass**
das Wärmespeicherelement (30) eine von einem Außenring (32) gebildete zylindrische, an den Wanddurchlass angepasste Grundform aufweist, wobei innerhalb des Außenrings (32) ein oder mehrere konzentrische Ringe (34) angeordnet sind, die zusammen mit radial verlaufenden Trennspeichen (38) eine Mehrzahl von Strömungskanälen bilden.

4. Wärmespeicherelement (30) nach Anspruch 3,
**dadurch gekennzeichnet, dass**
die Anzahl der Trennspeichen (38) entlang des Umfangs zwischen zwei konzentrischen Ringen (34) nach außen hin entweder gleichbleibt oder zunimmt, vorzugsweise ausgehend von einem Wert von wenigstens zwanzig Trennspeichen (38) entlang des Umfanges zwischen innerstem und zweitinnersten konzentrischen Ring (34).

5. Wärmespeicherelement nach Anspruch 3 oder 4,
**dadurch gekennzeichnet, dass**
die Strömungskanäle in einem zentralen Bereich (36) derart divergierend ausgebildet sind, dass diese einen auf der lüfterabgewandten Seite zentral im Bereich der Projektion einer Lüfternabe ein- oder ausströmenden Luftstrom lüfterseitig radial nach außen lenken.

6. Wärmespeicherelement (30) nach einem der Ansprüche 3 bis 5,
**dadurch gekennzeichnet, dass**
die durch die Stirnkanten der Trennspeichen (38) und der konzentrischen Ringe (34) lüfterseitig gebildete Einhüllende - ausgenommen den Außenring (32) und ausgenommen den zentralen Bereich (36) im Bereich der Projektion einer Lüfternabe - im Wesentlichen konvex ausgebildet ist.

7. Wärmespeicherelement (30) nach einem der Ansprüche 3 bis 6,

**dadurch gekennzeichnet, dass**
die Strömungskanäle auf der lüfterabgewandten Seite des Wärmespeicherelements (30) zu einem optionalen Sekundärwärmespeicherelement (52) hin unter Bildung eines Freiraumes (44) hinter die axiale Erstreckung des Außenrings (32) zurückspringen.

8.  Wärmespeicheranordnung (56) für dezentrale Raumbelüftungsanlagen,
    **dadurch gekennzeichnet, dass**
    die Wärmespeicheranordnung (56) ein Wärmespeicherelement (30) nach einem der vorhergehenden Ansprüche aufweist, das mit einem Sekundärwärmespeicherelement (52) mit im Wesentlichen parallel zur Längsachse verlaufenden Strömungskanälen gekoppelt ist.

9.  Wärmespeicheranordnung (56) nach Anspruch 8,
    **dadurch gekennzeichnet, dass**
    das Wärmespeicherelement (30) im Wesentlichen aus einem modifizierten Kunststoff hergestellt ist und das Sekundärwärmespeicherelement (52) aus einem im Wesentlichen keramischen Material hergestellt ist.

10. Wärmespeicheranordnung nach Anspruch 8 oder 9,
    **dadurch gekennzeichnet, dass**
    das Wärmespeicherelement (30) und das Sekundärwärmespeicherelement (52) unmittelbar hintereinander angeordnet sind und durch ein lösbares Kopplungselement verbunden sind.

11. Wärmespeicheranordnung (56) nach einem der Ansprüche 8 bis 10,
    **dadurch gekennzeichnet, dass**
    eine erhöhte Wärmespeicherfähigkeit des Wärmespeicherelements (30) auf jeden Fall dann gegeben ist, wenn die Wärmespeicheranordnung (56) mit Wärmespeicherelement (30) und Sekundärwärmespeicherelement (56) bei 7 °C Außenlufttemperatur und 20 °C Innenlufttemperatur sowie optimierter Lüfterdrehzahl und Zykluszeit näherungsweise dieselbe Wärmespeicherfähigkeit wie eine Wärmespeicheranordnung ohne Berücksichtigung des Wärmespeicherelements nur mit einem axial verlängerten Sekundärwärmespeicherelement bei im Wesentlichen gleichen Anströmverhältnissen des Sekundärwärmespeicherelements aufweist, wobei die hierfür erforderliche axiale Verlängerung des Sekundärwärmespeicherelements 30% oder mehr der axialen Erstreckung des Wärmespeicherelements beträgt.

12. Wärmespeicheranordnung (56) für dezentrale Raumbelüftungsanlagen, die zur Anordnung in einem eine Raumbelüftungseinrichtung aufnehmenden, eine Längsachse definierenden Wanddurchlass ausgebildet ist, und zwar zur Anordnung an einer Stirnseite angrenzend an einen reversierbar ansteuerbaren Axiallüfter (50),
    **dadurch gekennzeichnet, dass**
    die Wärmespeicheranordnung (56) aufweist:

    ein Wärmespeicherelement (30) nach einem der Ansprüche 1 bis 7,
    sowie ein Sekundärwärmespeicherelement (52) mit im Wesentlichen parallel zur Längsachse verlaufenden Strömungskanälen,
    wobei Wärmespeicherelement (30) und Sekundärwärmespeicherelement (52) zu einer gemeinsamen Einheit ohne Abstand zwischen den beiden Elementen, gekoppelt sind, wobei die Kopplung ggf. demontierbar ausgebildet ist.

13. Dezentrale Raumbelüftungseinrichtung,
    **dadurch gekennzeichnet, dass**
    diese ein Wärmespeicherelement (30) nach einem der Ansprüche 1 bis 7 oder eine Wärmespeicheranordnung (56) nach einem der Ansprüche Anspruch 8 bis 12 sowie wenigstens einen reversierbaren Axiallüfter (50) aufweist, der angrenzend an die Lüfterseite des Wärmespeicherelements (30) angeordnet ist.

**Claims**

1.  Heat storage element (30) for decentralized room ventilation systems, which is designed for arrangement in a wall passage that accommodates a room ventilation device and defines a longitudinal axis, namely for arrangement on one end side adjacent to a reversibly controllable axial fan (50) and optionally adjacent or optionally connected on the other end side with a secondary heat storage element (52),

**characterized in that**
the heat storage element (30) has flow guide elements with flow guide surfaces which form a plurality of flow channels, the flow guide surfaces not all being parallel, but at least partially oriented obliquely to the longitudinal axis, and that the heat storage element (30) is wholly or partially formed from a material and / or is constructed in such a way that the heat storage element (30) has an increased heat storage capacity, whereby the increased heat storage capacity of the heat storage element (30) is reached through at least partial use of a modified plastic with an increased heat storage number, the heat storage number being above $13 \cdot 10^5$ J / (K * $m^3$), and with increased thermal conductivity, the thermal conductivity being at or above 1.0 W / (K * m).

2. Heat storage element (30) according to claim 1,
   **characterized in that**
   the increased heat storage capacity of the heat storage element (30) is achieved by one or more of the following measures:

   a) at least partial use of a modified plastic with an increased heat storage number, the heat storage number being above $20 \cdot 10^5$ J / (K * $m^3$), and / or with increased thermal conductivity, the thermal conductivity being at or above 2.0 W / (K * m) lies; and / or
   b) Increase in the degree of coverage by the flow guiding elements, the degree of coverage of the inlet surface of the heat conducting element facing the fan being 30% or more by the flow guiding elements, and / or increasing the number of flow channels, preferably to more than 100 individual channels and / or, provided that a downstream secondary heat storage element (52) is provided, increasing the number of flow channels to a number of flow channels which is at least 30% of the number of flow channels that the downstream secondary heat storage element (52) has.

3. Heat storage element (30) according to claim 1 or 2,
   **characterized in that**
   the heat storage element (30) has a cylindrical basic shape formed by an outer ring (32) and adapted to the wall passage, whereby one or more concentric rings (34) being arranged within the outer ring (32), which form a plurality of flow channels together with radially extending separating spokes (38).

4. Heat storage element (30) according to claim 3,
   **characterized in that**
   the number of separating spokes (38) along the circumference between two concentric rings (34) either remains the same or increases towards the outside, preferably starting from a value of at least twenty separating spokes (38) along the circumference between the innermost and second innermost concentric ring (34).

5. Heat storage element according to claim 3 or 4,
   **characterized in that**
   the flow channels are designed to diverge in a central area (36) in such a way that they direct an air flow flowing in or out on the side facing away from the fan in the area of the projection of a fan hub radially outward on the fan side.

6. Heat storage element (30) according to one of claims 3 to 5,
   **characterized in that**
   the envelope formed by the front edges of the separating spokes (38) and the concentric rings (34) on the fan side - except for the outer ring (32) and except for the central area (36) in the area of the projection of a fan hub - is essentially convex.

7. Heat storage element (30) according to one of claims 3 to 6,
   **characterized in that**
   the flow channels on the side of the heat storage element (30) facing away from the fan spring back to an optional secondary heat storage element (52) forming a free space (44) behind the axial extent of the outer ring (32).

8. Heat storage arrangement (56) for decentralized room ventilation systems,
   **characterized in that**
   the heat storage arrangement (56) has a heat storage element (30) according to one of the preceding claims, which is coupled to a secondary heat storage element (52) with flow channels running essentially parallel to the longitudinal axis.

**9.** Heat storage arrangement (56) according to claim 8,
**characterized in that**
the heat storage element (30) is made essentially from a modified plastic and the secondary heat storage element (52) is made from an essentially ceramic material.

**10.** Heat storage arrangement according to claim 8 or 9,
**characterized in that**
the heat storage element (30) and the secondary heat storage element (52) are arranged directly one behind the other and are connected by a detachable coupling element.

**11.** Heat storage arrangement (56) according to one of claims 8 to 10,
**characterized in that**
an increased heat storage capacity of the heat storage element (30) is given in any case when the heat storage arrangement (56) with heat storage element (30) and secondary heat storage element (56) at 7 ° C outside air temperature and 20 ° C inside air temperature as well as optimized fan speed and cycle time have approximately the same heat storage capacity as a heat storage arrangement without taking the heat storage element into account only with an axially elongated secondary heat storage element with essentially the same inflow conditions of the secondary heat storage element, the axial extension of the secondary heat storage element required for this being 30% or more of the axial extent of the heat storage element.

**12.** Heat storage arrangement (56) for decentralized room ventilation systems, which is designed for arrangement in a wall passage that receives a room ventilation device and defines a longitudinal axis, namely for arrangement on one end face adjacent to a reversibly controllable axial fan (50),
**characterized in that**
the heat storage arrangement (56) comprises:

a heat storage element (30) according to one of claims 1 to 7,
and a secondary heat storage element (52) with flow channels running essentially parallel to the longitudinal axis, wherein the heat storage element (30) and the secondary heat storage element (52) are coupled to form a common unit without a spacing between the two elements, the coupling possibly being designed to be removable.

**13.** Decentralized room ventilation system,
**characterized in that**
this has a heat storage element (30) according to one of claims 1 to 7 or a heat storage arrangement (56) according to one of claims 8 to 12 and at least one reversible axial fan (50) which is arranged adjacent to the fan side of the heat storage element (30).

**Revendications**

**1.** Élément d'accumulation de chaleur (30) pour systèmes de ventilation de pièce décentralisés, qui est conçu pour être disposé dans un passage mural qui reçoit un dispositif de ventilation de pièce et définit un axe longitudinal, à savoir pour être disposé sur un côté d'extrémité adjacent à un axe axial à commande réversible ventilateur (50) et éventuellement adjacent ou éventuellement connecté de l'autre côté d'un élément d'accumulation de chaleur secondaire (52),
**caractérisé en ce que**
l'élément d'accumulation de chaleur (30) présente des éléments de guidage d'écoulement avec des surfaces de guidage d'écoulement qui forment une pluralité de canaux d'écoulement, les surfaces de guidage d'écoulement n'étant pas toutes parallèles, mais au moins partiellement orientées obliquement par rapport à l'axe longitudinal, et **que** l'élément d'accumulation de chaleur (30) est entièrement ou partiellement formé d'un matériau et/ou est construit de telle sorte que l'élément d'accumulation de chaleur (30) a une capacité d'accumulation de chaleur accrue, grâce à quoi la capacité d'accumulation de chaleur accrue de l'élément d'accumulation de chaleur (30) est atteinte grâce à l'utilisation au moins partielle d'un plastique modifié avec un indice d'accumulation de chaleur accru, l'indice d'accumulation de chaleur étant supérieur à $13 \cdot 10^5$ J / (K * m$^3$), et avec une conductivité thermique accrue, la conductivité thermique étant égale ou supérieure à 1,0 W / (K * m).

**2.** Elément d'accumulation de chaleur (30) selon la revendication 1,
**caractérisé en ce que**

l'augmentation de la capacité d'accumulation de chaleur de l'élément d'accumulation de chaleur (30) est obtenue par une ou plusieurs des mesures suivantes :

a) utilisation au moins partielle d'une matière plastique modifiée avec un indice d'accumulation de chaleur accru, l'indice d'accumulation de chaleur étant supérieur à $20 \cdot 10^5$ J / (K * m$^3$), et/ou avec une conductivité thermique accrue, la conductivité thermique étant égale ou au-dessus de 2,0 W / (K * m) se trouve; et/ou

b) Augmentation du degré de couverture par les éléments de guidage de flux, le degré de couverture de la surface d'entrée de l'élément conducteur de chaleur faisant face au ventilateur étant de 30% ou plus par les éléments de guidage de flux, et/ou augmentation du nombre de canaux d'écoulement, de préférence à plus de 100 canaux individuels et/ou, à condition qu'un élément d'accumulation de chaleur secondaire en aval (52) soit prévu, augmentant le nombre de canaux d'écoulement à un nombre de canaux d'écoulement qui est d'au moins 30 % du nombre de canaux d'écoulement que possède l'élément d'accumulation de chaleur secondaire en aval (52).

3. Elément d'accumulation de chaleur (30) selon la revendication 1 ou 2,
**caractérisé en ce que**
l'élément d'accumulation de chaleur (30) a une forme de base cylindrique formée par une bague extérieure (32) et adaptée au passage de paroi, un ou plusieurs anneaux concentriques (34) étant disposés à l'intérieur de la bague extérieure (32), qui forment une pluralité de canaux d'écoulement avec des rayons de séparation (38) s'étendant radialement.

4. Elément d'accumulation de chaleur (30) selon la revendication 3,
**caractérisé en ce que**
le nombre de rayons séparateurs (38) le long de la circonférence entre deux anneaux concentriques (34) soit reste le même soit augmente vers l'extérieur, de préférence à partir d'une valeur d'au moins vingt rayons séparateurs (38) le long de la circonférence entre le plus intérieur et le deuxième bague concentrique la plus interne (34).

5. Elément d'accumulation de chaleur selon la revendication 3 ou 4,
**caractérisé en ce que**
les canaux d'écoulement sont conçus pour diverger dans une zone centrale (36) de telle sorte qu'ils dirigent un flux d'air entrant ou sortant du côté opposé au ventilateur dans la zone de projection d'un moyeu de ventilateur radialement vers l'extérieur sur le côté ventilateur.

6. Elément d'accumulation de chaleur (30) selon l'une des revendications 3 à 5,
**caractérisé en ce que**
l'enveloppe formée par les bords avant des rayons séparateurs (38) et les anneaux concentriques (34) côté ventilateur - à l'exception de l'anneau extérieur (32) et à l'exception de la zone centrale (36) dans la zone de la saillie d'un moyeu de ventilateur - est essentiellement convexe.

7. Elément d'accumulation de chaleur (30) selon l'une des revendications 3 à 6,
**caractérisé en ce que**
les canaux d'écoulement sur le côté de l'élément d'accumulation de chaleur (30) opposé au ventilateur reviennent élastiquement vers un élément d'accumulation de chaleur secondaire optionnel (52) formant un espace libre (44) derrière l'étendue axiale de la bague extérieure (32).

8. Dispositif d'accumulation de chaleur (56) pour les systèmes de ventilation décentralisés des locaux,
**caractérisé en ce que**
le dispositif d'accumulation de chaleur (56) présente un élément d'accumulation de chaleur (30) selon l'une des revendications précédentes, qui est couplé à un élément d'accumulation de chaleur secondaire (52) avec des canaux d'écoulement s'étendant essentiellement parallèlement à l'axe longitudinal.

9. Agencement d'accumulation de chaleur (56) selon la revendication 8,
**caractérisé en ce que**
l'élément d'accumulation de chaleur (30) est constitué essentiellement d'un plastique modifié et l'élément d'accumulation de chaleur secondaire (52) est constitué d'un matériau essentiellement céramique.

10. Agencement d'accumulation de chaleur selon la revendication 8 ou 9,
**caractérisé en ce que**

l'accumulateur de chaleur (30) et l'accumulateur de chaleur secondaire (52) sont disposés directement l'un derrière l'autre et sont reliés par un élément d'accouplement amovible.

11. Agencement d'accumulation de chaleur (56) selon l'une des revendications 8 à 10,
    **caractérisé en ce que**
    une capacité d'accumulation de chaleur accrue de l'élément d'accumulation de chaleur (30) est donnée dans tous les cas lorsque le dispositif d'accumulation de chaleur (56) avec élément d'accumulation de chaleur (30) et élément d'accumulation de chaleur secondaire (56) à une température de l'air extérieur de 7 °C et une température de l'air intérieur de 20 °C ainsi qu'une vitesse de ventilateur et une durée de cycle optimisées ont approximativement la même capacité d'accumulation de chaleur qu'un dispositif d'accumulation de chaleur sans tenir compte de l'élément d'accumulation de chaleur uniquement avec un élément d'accumulation de chaleur secondaire allongé axialement avec essentiellement le même flux entrant conditions de l'élément d'accumulation de chaleur secondaire, l'extension axiale de l'élément d'accumulation de chaleur secondaire requise pour cela étant de 30 % ou plus de l'étendue axiale de l'élément d'accumulation de chaleur.

12. Agencement d'accumulation de chaleur (56) pour systèmes de ventilation de pièce décentralisés, qui est conçu pour être disposé dans un passage mural qui reçoit un dispositif de ventilation de pièce et définit un axe longitudinal, à savoir pour être disposé sur une face frontale adjacente à un ventilateur axial à commande réversible 50),
    **caractérisé en ce que**
    l'agencement d'accumulation de chaleur (56) comprend :

    un élément d'accumulation de chaleur (30) selon l'une des revendications 1 à 7,
    et un élément d'accumulation de chaleur secondaire (52) avec des canaux d'écoulement s'étendant essentiellement parallèlement à l'axe longitudinal, dans lequel l'élément d'accumulation de chaleur (30) et l'élément d'accumulation de chaleur secondaire (52) sont couplés pour former une unité commune sans espacement entre les deux éléments, le couplage étant éventuellement conçu pour être amovible.

13. Système de ventilation de pièce décentralisée,
    **caractérisé en ce que**
    celui-ci présente un élément d'accumulation de chaleur (30) selon l'une des revendications 1 à 7 ou un dispositif d'accumulation de chaleur (56) selon l'une des revendications 8 à 12 et au moins un ventilateur axial réversible (50) qui est disposé à côté du ventilateur côté de l'élément d'accumulation de chaleur (30).

**Fig. 1**

**Fig. 2**

**Fig. 3a**
(Stand der Technik)

**Fig. 3b**
(Stand der Technik)

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1052624 A1

- DE 102015103594 B3